# EUROPÄISCHE PATENTANMELDUNG

(11) **EP 2 280 582 A1**
(43) Veröffentlichungstag der Anmeldung: **02.02.2011**
(21) Anmeldenummer: 10007028.3
(22) Anmeldetag: 07.07.2010
(51) Int. Cl.: H05B 33/08

(54) **Leuchtdiodenbeleuchtung und deren Verfahren zur Stromsteuerung**

(30) Priorität: 09.07.2009 TW 98123213
(71) Anmelder: Lextar Electronics Corp., Hsinchu Science Park 30075 Hsinchu (TW)
(72) Erfinder: Wu, Meng-Chai, 30075 Hsinchu (TW); Tzou, Hua-Lung, 30075 Hsinchu (TW); Hsu, Chun-Kai, 30075 Hsinchu (TW)
(74) Vertreter: Zeitler - Volpert - Kandlbinder

(57) **Zusammenfassung**

Die Erfindung betrifft eine Leuchtdiodenbeleuctung, die ein Antriebsmodul (10), mindestens eine Leuchtdiodenlampe (20) und mindestens ein Stromübertragungskabel (30) umfaßt, wobei das Stromübertragungskabel (30) zur elektrischen Verbindung des Antriebsmoduls (10) und der Leuchtdiodenlampe (20)dient; das Antriebsmodul (20) einen hochfrequenten Wechselstrom von über 30V und 72Hz erzeugen kann; und die Leuchtdiodenlampe (20) mindestens ein Leuchtdiodenelement (21) und ein Gleichrichtermodul (22) aufweist, wobei der hochfrequente Wechselstrom aus dem Antriebsmodul (10) von dem Gleichrichtermodul (22) in einen für den Betrieb des Leuchtdiodenelements (21) erforderlichen Gleichstrom umgewandelt wird. Dadurch kann die Flickererscheinung des Lichtes vermieden werden und ein Filterelement in der Leuchtdiodenlampe entfallen. Zudem kann die Leuchtdiodenlampe mit einer einfachen Schaltung angetrieben werden, so dass die Herstellungskosten reduziert werden.

## Beschreibung

### Technisches Gebiet

Die Erfindung betrifft eine Leuchtdiodenbeleuchtung und deren Verfahren zur Stromsteuerung.

### Stand der Technik

Die Leuchtdiode besteht aus einem Festkörper und weist somit im Vergleich mit der Leuchtstoffröhre oder Glühbirne eine bessere Vibration-, Schwingungs- und Reibfestigkeit auf, so dass die Lebensdauer der Leuchtdiode länger ist. Die Hochtleistungsdiode findet eine immer breitere Anwendung auf die Beleuchtung, wie Taschenlampe, Spotlampe, Zeltlampe, Blinker, Lampe für medizinische Geräte, Outdoor-Beleuchtung usw., und ersetzt immer mehr die Leuchtstoffröhre und Glühbirne.

Die modulierten Leuchtdiodenelemente können einen Streifen, ein Array oder eine Rundscheibe bilden und als Beleuchtung für bestimmte Produkte eingesetzt werden. Die Antriebsschaltung für die Leuchtdiodenlampe verwendet üblicherweise einen Gleichstrom oder wandelt einen Wechselstrom in Gleichstrom um. Die Wechselstrom-Gleichstrom-Umwandlungsschaltung ist komplizierter. Zudem ist die umgewandelte Hochspannung gefährlich. Ferner besitzt der Filterkondensator eine begrenzte Lebensdauer.

Die Antriebsschaltung der Leuchtdiodenbeleuchtung ist üblicherweise in der Leuchtdiodenlampe eingebaut und muß einen Filterkondensator verwenden, um eine Flickererscheinung durch Vf zu vermeiden. Durch den Filterkondensator ist die Schaltung der Leuchtdiodenlampe komplizierter. Zudem kann die Leuchtdioden lampe nicht normal arbeiten, wenn der Filterkonensator beschädigt ist.

### Aufgabe der Erfindung

Der Erfindung liegt die Aufgabe zugrunde, eine Leuchtdiodenbeleuchtung, die die Flickererscheinung des Lichtes vermeidet und auf ein Filterelement in der Leuchtdiodenlampe verzichtet, und ein Verfahren zur Stromsteuerung für diese Leuchtdiodenbeleuchtung zu schaffen.

Diese Aufgabe wird durch die erfindungsgemäße Leuchtdiodenbeleuchtung gelöst, die ein Antriebsmodul, mindestens eine Leuchtdiodenlampe und mindestens ein Stromübertragungskabel umfaßt, wobei das Stromübertragungskabel zur elektrischen Verbindung des Antriebsmoduls und der Leuchtdiodenlampe dient; das Antriebsmodul einen hochfrequenten Wechselstrom von über 30V und 72Hz erzeugen kann; und die Leuchtdiodenlampe mindestens ein Leuchtdiodenelement und ein Gleichrichtermodul aufweist, wobei der hochfrequente Wechselstrom aus dem Antriebsmodul von dem Gleichrichtermodul in einen für den Betrieb des Leuchtdiodenelements erforderlichen Gleichstrom umgewandelt wird.

Dadurch kann die Flickererscheinung des Lichtes vermieden werden und ein Filterelement in der Leuchtdiodenlampe entfallen. Zudem kann die Leuchtdiodenlampe mit einer einfachen Schaltung angetrieben werden, so dass die Herstellungskosten reduziert werden.

### Kurze Beschreibung der Zeichnungen

- Figur 1: eine Blockschaltung des ersten Ausführungsbeispiels der erfindungsgemäßen Leuchtdiodenbeleuchtung,
- Figur 2: eine Blockschaltung des Antriebsmoduls,
- Fiugr 3: eine Darstellung der Stromübertragung zwischen dem Antriebsmodul und der Leuchtdiodenlampe,
- Figur 4: eine Blockschaltung der zweiten Ausführungsbeispiels der erfindungsgemäßen Leuchtdiodenbeleuchtung,
- Figur 5: eine Blockschaltung der dritten Ausführungsbeispiels der erfindungsgemäßen Leuchtdiodenbeleuchtung,
- Figur 6: eine Darstellung der Wellenformen der Stromübertragung zwischen dem Antriebsmodul und der Leuchtdiodenlampe,

### Wege zur Ausführung der Erfindung

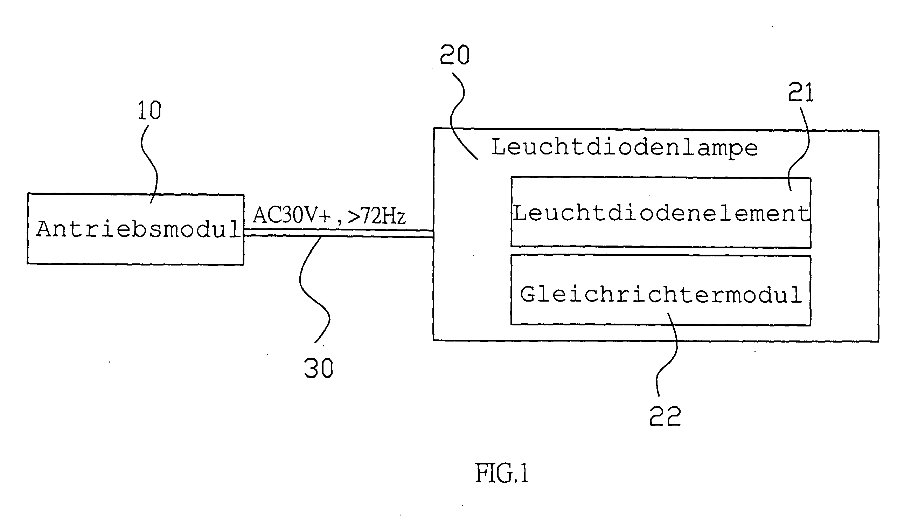

Die Erfindung betrifft eine Leuchtdiodenbeleuchtung, die Flickererscheinung vermeiden und einen Filter nicht benötigt. Wie aus Figur 1 ersichtlich ist, umfaßt die Erfindung ein Antriebsmodul 1, mindestens eine Leuchtdiodenlampe 20 und mindestens ein Stromübertragungskabel 30.

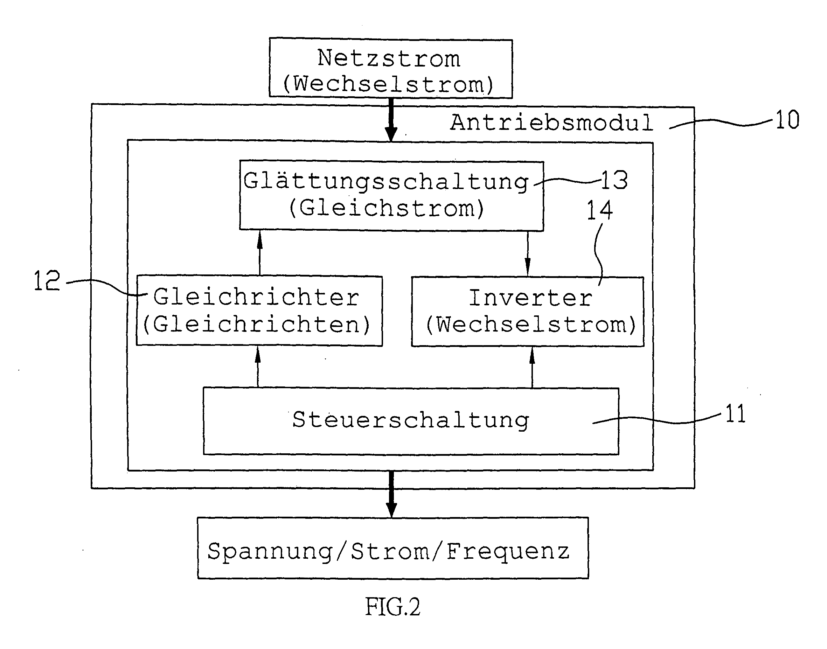

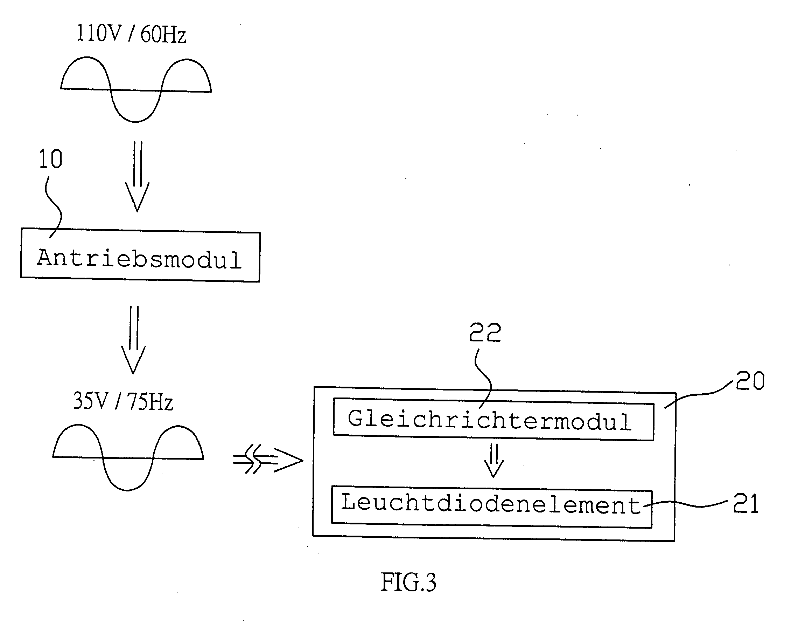

Das Antriebsmodul 10 kann einen hochfrequenten Wechselstrom von über 30V und 72Hz erzeugen und enthält eine Steuerschaltung 11, einen Gleichrichter 12, eine Glättungsschaltung 13 und einen Inverter 14. Wie aus den Figuren 2 und 3 ersichtlich ist, wird der Netzstrom (110V/60Hz) im Antriebsmodul 10 von dem Gleichrichter 12 in einen Gleichstrom umgewandelt, der dann von der Glättungsschaltung 13 geglättet und schließlich von dem Inverter 14 in einen hochfrequenten Wechselstrom (35V/75Hz) mit verstellbarer Frequenz umgewandelt wird.

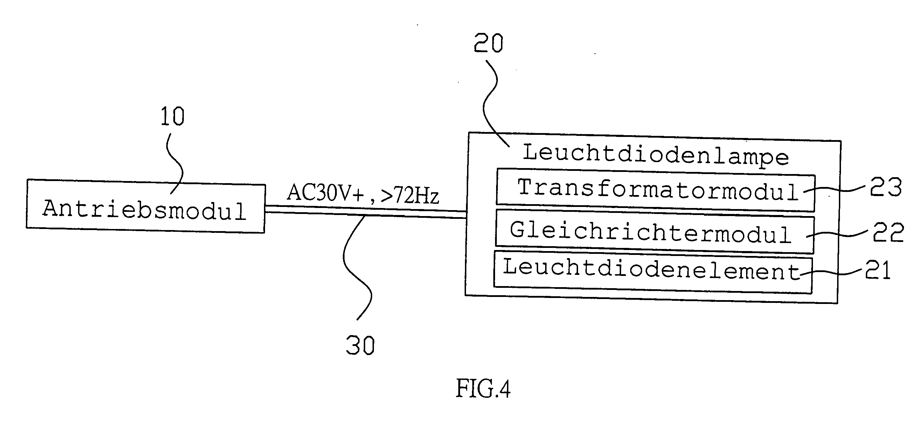

Die Leuchtdiodenlampe 20 weist mindestens ein Leuchtdiodenelement 21 und ein Gleichrichtermodul 22. Durch das Gleichrichtermodul 22 wird der hochfrequente Wechselstrom aus dem Antriebsmodul 10 in einen für den Betrieb des Leuchtdiodenelements 21 erforderlichen Gleichstrom umgewandelt. Die Leuchtdiodenlampe 20 kann, wie es in Figur 4 dargestellt ist, weiter ein Transformermodul 23 aufweisen, das die Spannung des hochfrequenten Wechselstroms aus dem Antriebsmodul 10 auf eine für den Betrieb des Leuchtdiodenelements 21 erforderliche Spannung senken oder erhöhen.

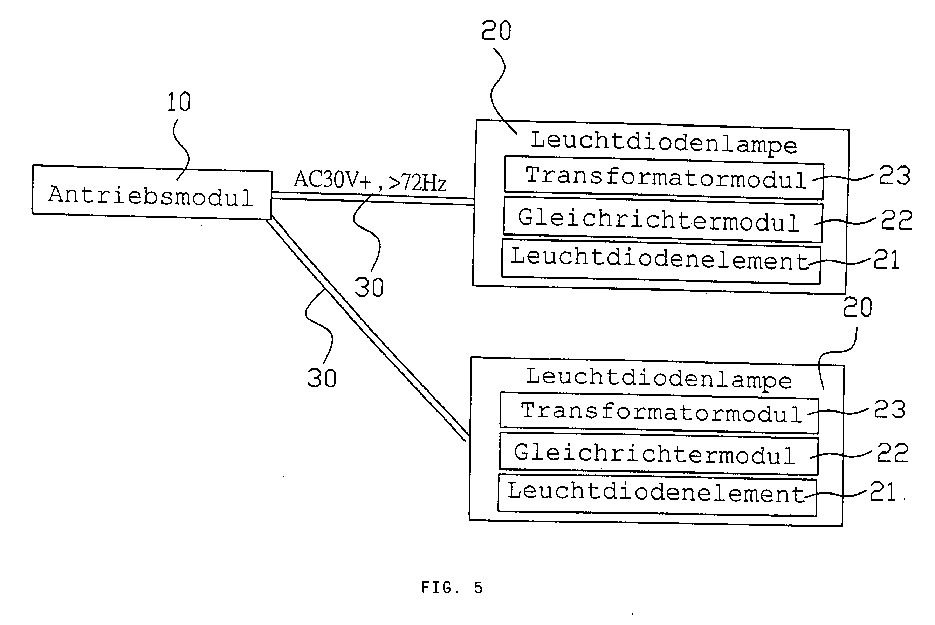

Das Stromübertragungskabel 30 dient zur elektrischen Verbindung des Antriebsmoduls 10 und der Leuchtdiodenlampe 20, damit das Antriebsmodul 10 über das Stromübertragungskabel 30 die Leuchtdiodenlampe 20 mit Strom versorgen kann. Wie aus Figur 5 ersichtlich ist, kann das Antriebsmodul 10 gleichzeitig mehrere Leuchtdiodenlampen 20 mit Strom versorgen.

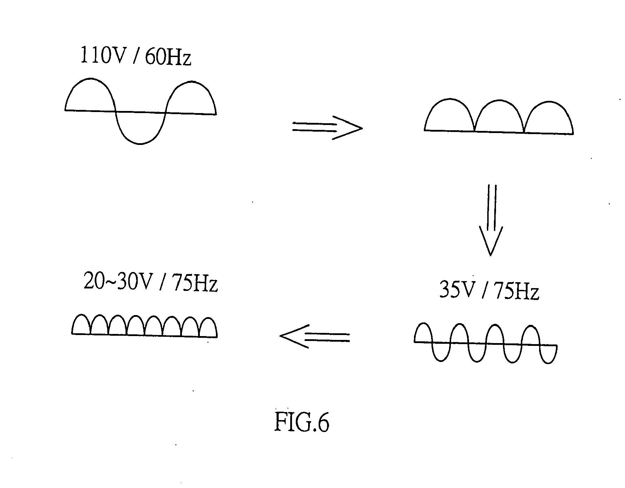

Das erfindungsgemäße Verfahren zur Stromsteuerung enthält folgende Schritte:
a. der Netzstrom (110V/60Hz Gleichstrom in Figur 6) wird zunächst in einen Gleichstrom und dann in einen hochfrequenten Wechselstrom von über 30V und 72Hz mit verstellbarer Frequenz (35V/75Hz in Figur) umgewandelt; und
b. der hochfrequente Wechselstrom von über 30V und 72Hz mit verstellbarer Frequenz wird in einen für den Betrieb des Leuchtdiodenelements erforderlichen Gleichstrom (von 20V-50V und 75Hz in Figur) umgewandelt.

Die Erfindung verwendet bei der Stromübertragung zwischen dem Antriebsmodul und der Leuchtdiodenlampe einen hochfrequenten Wechselstrom, um langgestreckte Hochleistungsleuchtdiode anzutreiben. Dadurch kann ein Stromverlust durch eine erhebliche Spannungssenkung bei der Stromübertragung in der herkömmlichen Lösung vermieden werden. Zudem kann die Flickererscheinung des Lichtes auf ein Minimum reduziert werden. Ferner kann ein unterschiedlicher Transformator (wie Trasformator aus piezoelektrischem Material) gewählt werden, um das Volumen zu verkleinern und den Wirkungsgrad zu erhöhen.

Tabelle 1 zeigt den Stromverlust unter unterschiedlichen Übertragungsspannungen bei einer Übertragungsstrecke von 100W/20m.

**Tabelle 1**

| | Übertragungsspannung (V) | Strom (A) | Drahtwiderstand (Ω) | Verlust (W) |
|---|---|---|---|---|
| Beispiel 1 | 3 | 33.33 | 0.33 | 366.67 |
| Beispiel 2 | 10 | 10.00 | 0.33 | 33.00 |
| Beispiel 3 | 20 | 5.00 | 0.33 | 8.25 |
| Beispiel 4 | 30 | 3.33 | 0.33 | 3.67 |
| Beispiel 5 | 40 | 2.50 | 0.33 | 2.06 |
| Beispiel 6 | 50 | 2.00 | 0.33 | 1.32 |
| Beispiel 7 | 60 | 1.67 | 0.33 | 0.92 |
| Beispiel 8 | 70 | 1.43 | 0.33 | 0.67 |
| Beispiel 9 | 80 | 1.25 | 0.33 | 0.52 |
| Beispiel 10 | 90 | 1.11 | 0.33 | 0.41 |
| Beispiel 11 | 100 | 1.00 | 0.33 | 0.33 |
| Beispiel 12 | 110 | 0.91 | 0.33 | 0.27 |

Aus der Tabelle 1 ist zu entnehmen, dass bei der langgestreckten Stromübertragung zwischen der Leuchtdioden lampe und dem Antriebsmodul der Stromverlust mit der Erhöhung der Übertragungsspannung abnimmt. Wenn die Übertragungsspannung über 30V (Beispiel 4-12) liegt, ist der Stromverlust kleiner als 5W. Dies ist akzeptabel. Wenn die Übertragungsspannung unter 30V (Beispiel 1-3) liegt, ist der Stromverlust zu groß, so dass die Hochleistungsdiode nicht angetrieben werden kann. Da die Übertragungsspannung der Erfindung über 30V liegt, wird der Stromverlust bei der Stromübertragung erheblich reduziert, so dass der Betrieb der Hochleistungsdiode gewährleistet werden kann.

Bei der Erfindung entfällt das Filterelement in der Leuchtdiodenlampe, wodurch in der Leuchtdiodenlampe Bauelemente mit kürzerer Lebensdauer, wie Aktor und Kondensator, nicht vorhanden ist, so dass die Zuverläßigkeit der Leuchtdiodenlampe erheblich erhöht wird. Die Leuchtdiodenlampe kann mit einer einfachen Schaltung angetrieben werden, so dass die Herstellungskosten reduziert werden.

Aufgrund der obengenannten Tatsachen entspricht die Erfindung in ihrer Verfügbarkeit, Fortschrittlichkeit und Neuheit vollauf den Anforderungen für ein Patent. Die vorstehende Beschreibung stellt nur die bevorzugten Ausführungsbeispiele der Erfindung dar und soll nicht als Definition der Grenzen und des Bereiches der Erfindung dienen. Alle gleichwertige Änderungen und Modifikationen gehören zum Schutzbereich dieser Erfindung.

## Patentansprüche

1. Leuchtdiodenbeleuctung, umfassend
ein Antriebsmodul (10), das einen hochfrequenten Wechselstrom von über 30V und 72Hz erzeugen kann,
mindestens eine Leuchtdiodenlampe (20), die mindestens ein Leuchtdiodenelement (21)und ein Gleichrichtermodul (22) aufweist, wobei der hochfrequente Wechselstrom aus dem Antriebsmodul (10) von dem Gleichrichtermodul (22) in einen für den Betrieb des Leuchtdiodenelements (21) erforderlichen Gleichstrom umgewandelt wird, und
mindestens ein Stromübertragungskabel (30), das zur elektrischen Verbindung des Antriebsmoduls (10) und der Leuchtdiodenlampe (20) dient.

2. Leuchtdiodenbeleuchtung nach Anspruch 1, **dadurch gekennzeichnet, dass** das Antriebsmodul (10) eine Steuerschaltung (11), einen Gleichrichter (12), eine Glättungsschaltung (13) und einen Inverter (14) enthält.

3. Leuchtdiodenbeleuchtung nach Anspruch 1, **dadurch gekennzeichnet, dass** die Leucht dioden lampe (20) ein Transformermodul (23) aufweist, das die Spannung des hochfrequenten Wechselstroms aus dem Antriebsmodul (10) senken oder erhöhen kann.

4. Verfahren zur Stromsteuerung für die Leuchtdiodenbeleuchtung, das folgende Schritte enthält:
a. der Netzstrom wird in einen hochfrequenten Wechselstrom von über 30V und 72Hz mit verstellbarer Frequenz umgewandelt; und
b. der hochfrequente Wechselstrom wird in einen für den Betrieb des Leuchtdiodenelements erforderlichen Gleichstrom umgewandelt.

5. Verfahren nach Anspruch 4, **dadurch gekennzeichnet, dass** die Spannung des Gleichstroms im Bereich von 20V-50V liegt.

6. Verfahren nach Anspruch 4, **dadurch gekennzeichnet, dass** im Schritt a) der Netzstrom zunächst in einen Gleichstrom und dann in einen hochfrequenten Wechselstrom von über 30V und 72Hz mit verstellbarer Frequenz umgewandelt wird.
